# EUROPÄISCHE PATENTSCHRIFT

(11) **EP 3 497 381 B1**
(45) Veröffentlichungstag und Bekanntmachung des Hinweises auf die Patenterteilung: **25.11.2020**
(21) Anmeldenummer: 17755438.3
(22) Anmeldetag: 03.08.2017
(51) Int. Cl.: F24S 40/00, F28F 1/00, F28F 1/12, F28F 1/14, H02S 40/42, H02S 40/44

(54) **PHOTOVOLTAIK-THERMIE-MODUL MIT LUFT-WÄRMEÜBERTRAGER**
PHOTOVOLTAIC THERMAL MODULE WITH AIR HEAT EXCHANGER
MODULE THERMIQUE PHOTOVOLTAÏQUE À ÉCHANGEUR DE CHALEUR PAR AIR

(30) Priorität: 13.08.2016 DE 202016004934 U
(43) Veröffentlichungstag der Anmeldung: 19.06.2019
(73) Patentinhaber: CONSOLAR Solare Energiesysteme GmbH, 60486 Frankfurt am Main (DE); Triple Solar BV, 1031 HD Amsterdam (NL)
(72) Erfinder: LEIBFRIED, Ulrich, 79539 Lörrach (DE); MAGER, Cornelis Paul, 1016 CW Amsterdam (NL)
(74) Vertreter: Huwer, Andreas
(86) Internationale Anmeldenummer: PCT/EP2017/069742
(87) Internationale Veröffentlichungsnummer: WO 2018/033409

(56) Entgegenhaltungen:
- WO-A1-2008/110249
- WO-A1-2009/002350
- WO-A2-2011/076403
- CN-A- 102 664 209
- DE-A1-102010 013 673
- DE-A1-102011 055 903
- FR-A1- 2 998 095
- US-A1- 2014 014 162

## Beschreibung

Die Erfindung betrifft ein Photovoltaik-Thermie-Modul ("PVT-Modul") zur kombinierten Strom- und Wärmeerzeugung. Es wird insbesondere zur Bereitstellung von Niedertemperaturwärme für Wärmepumpen zur Erzeugung von Warmwasser und Heizwärme und zur Gebäudekühlung eingesetzt und deckt dabei gleichzeitig zumindest einen Teil des Strombedarfs der Wärmepumpe und/oder des Haushalts.

Am Markt ist eine Vielzahl von PVT-Modulen bekannt, siehe z. B. [M. Adam, H. P. Wirth, R. Radasavljevic: Verbundprojekt: Standardisierung und Normung von multifunktionalen PVT Solarkollektoren (PVT-Norm), Abschlussbericht eines BMWi-geförderten Projekts der Fachhochschule Düsseldorf, 2014]. Eine Beschreibung und Diskussion der unterschiedlichen PVT-Modul-Typen kann der DE 20 2016 003 756.1 entnommen werden. Die hier beschriebene Erfindung entspricht der Nutzung von PVT-Modulen als Niedertemperatur-Wärmequelle insbesondere für eine Wärmepumpe. Die in [Glück, C.; Faßnacht, T.; Leibfried, U.: Simulationsstudie zur Integration von PV-Modulen und PVT-Kollektoren in ein Solar-Wärmepumpensystem. 24. OTTI Symposium Thermische Solarenergie, 07.-09. Mai 2014, Bad-Staffelstein] präsentierten Untersuchungen zeigen, dass PVT-Module, die als einzige Wärmequelle von Wärmepumpen dienen sollen, einen Wärmedurchgangskoeffizienten von 40 W/(m² K) oder mehr benötigen.

Untersuchungen zeigen, dass bei Flächen im Bereich 20 bis 25 m² bei einem Jahreswärmeverbrauch von ca. 10.000 kWh in den kältesten Wintermonaten der größere Teil der Niedertemperaturwärme durch Umgebungsluft-Wärmeentzug bereit gestellt wird. Daher ist eine Aufgabenstellung der hier vorgestellten Erfindung, das PVT-Modul mit Luft-Wärmeübertrager so zu gestalten, dass die Wärmeübertragung von der Umgebungsluft zum Wärmeträgerfluid optimiert ist.

Ein von PVT-Modulen, die mit Wärmepumpen gekoppelt sind, bekannter nachteiliger Effekt ist die Vereisung, die auf der Oberfläche des PV-Moduls insbesondere bei Lufttemperaturen etwas über 0 °C (feuchte Luft) und Wärmeträgertemperaturen unter 0 °C auftritt. Auch dieser Effekt soll mit der Erfindung minimiert werden.

Aufgabenstellung dieser Erfindung ist, ein Photovoltaik-Thermie-Modul zur kombinierten Strom- und Wärmeerzeugung zu schaffen, das einen hohen Wärmedurchgangskoeffizienten von der Umgebungsluft zum des Wärmeträgermedium aufweist und dabei kostengünstig in Herstellung und Montage sowie sicher und langlebig im Betrieb ist. Weiterhin sollen folgende Punkte zumindest in Ausgestaltungen der Erfindung ermöglicht werden:
- Minimierung von thermischen Spannungen, übertragen durch die Wärmeübertragerstruktur auf das PV-Modul, u. a. bei Thermoschock.
- Kleiner Temperaturunterschied zwischen PV-Modul und Umgebungsluft (Minimierung der Vereisung) bei guter Wärmeübertragung zwischen Umgebungsluft und Wärmeträgerfluid unter Nutzung der Fläche des PV-Moduls als Wärmeübertragerfläche.
- Ohne Kühlung des Moduls durch das Wärmeträgerfluid soll das PV-Modul gut durch Umgebungsluft gekühlt werden.
- Nutzung von Standard-PV-Modulen ermöglichen, um von deren Kostendegression zu profitieren.
- Nutzung von verbreiteten rationellen industriellen Fertigungsverfahren für den Wärmeübertrager.

Ein Photovoltaik-Thermie-Modul zur kombinierten Strom- und Wärmeerzeugung ist in der WO 2012/130429 A2 beschrieben. Bei der dort dargestellten Vorrichtung soll der oben beschriebene Effekt der Eisbildung dadurch minimiert werden, dass zwischen PV-Modul und Wärmeübertrager, durch den das kalte Fluid fließt, ein Abstand vorgesehen ist: Zwischen PV-Modul und Solarthermie-Modul befindet sich ein Kanal für Gasmedium, insbesondere für Luft. Luft dient zur Übertragung der thermischen Energie vom PV-Modul zum Solarthermiemodul. Das Solarthermiemodul dient zur Absorption thermischer Energie welche insbesondere durch solare Energie erzeugt wurde. Die Erfindung ist u. a. zur zumindest teilweisen Versorgung einer Wärmepumpe mit Wärmeenergie und Strom vorgesehen. Für diese Anwendung weist sie folgende Nachteile auf:
- Die am PV-Modul durch Strahlungsabsorption entstehenden Temperaturen werden dem Wärmepumpenkreis nicht direkt, sondern durch den thermischen Widerstand des Luftkanals reduziert zur Verfügung gestellt, daraus folgt ein reduzierter Wirkungsgrad der Wärmepumpe.
- Durch den isolierenden Luftspalt zwischen PV-Modul und Solarthermie-Modul wird beim Wärmepumpen-Betrieb das PV-Modul nur eingeschränkt gekühlt, wodurch der elektrische Umwandlungswirkungsgrad nur suboptimal ist.
- Das gleiche gilt für Zeiten, in denen die Wärmepumpe nicht läuft: dadurch, dass die Rückseite des PV-Moduls nicht frei von Umgebungsluft umströmt werden kann, heizt es sich stärker auf als ohne das Solarthermie-Modul, und der elektrische Umwandlungswirkungsgrad wird reduziert.
- Die Oberfläche des PV-Moduls wird nur eingeschränkt als Wärmeübertragerfläche zur Umgebungsluft genutzt, da sie nicht thermisch leitend mit dem Solarthermiemodul in Verbindung steht und auf der Rückseite nicht frei von Umgebungsluft umströmt werden kann.
- Der Wärmeübergang von der Umgebungsluft, welcher bei Einsatz eines kombinierten Photovoltaik-Thermie-Moduls wesentlich für die effiziente Funktion im Winter ist, ist durch das beschriebene, zum PV-Modul parallel verlaufende Solarthermie-Flächenelement nur suboptimal.

Neben dieser Schrift gibt es weitere Schriften, in denen ein Abstand oder eine thermische Isolation zwischen PV-Modul und Wärmeübertrager vorgesehen sind:
In der DE 10 2007 022 164 A1 wird eine Anordnung zum Gewinnen elektrischer und thermischer Energie aus solarer Strahlungsenergie vorgestellt. Sie besteht aus zwei "Strahlungsauffangflächen", einer ersten, die v. a. kurzwellige Strahlung in elektrische Energie umwandelt und einer zweiten, mit Abstand dahinter gelegenen, die v. a. langwellige Strahlung in Wärmeenergie umwandelt. Ziel der Erfindung ist, dass ein möglichst großen Anteil der langwelligen Strahlung nicht auf die "erste Energiegewinnungsvorrichtung", die Strom erzeugt, tritt, um die "zweite Energiegewinnungsvorrichtung" (= Wärmeerzeugung) zu erwärmen. Dabei soll direkt nutzbare Wärme in der "zweiten Energiegewinnungsvorrichtung" erzeugt werden. Der Abstand zwischen den beiden Energiegewinnungsvorrichtungen soll sicher stellen, dass die erwärmte zweite Energiegewinnungsvorrichtung nicht die erste erwärmt, deren elektrischer Umwandlungswirkungsgrad dadurch reduziert würde.

Die Aufgabenstellung und vorgeschlagenen Lösungen entsprechen nicht der hier beschriebenen Erfindung, in der das PV-Modul genutzt werden soll als Niedertemperaturwärmequelle insbesondere für ein Wärmepumpensystem zur Erzeugung von Warmwasser und Heizwärme und zur Gebäudekühlung. Für diese Aufgabenstellung ist der Aufbau der DE 10 2007 022 164 A1 nicht vorteilhaft, siehe Diskussion zur WO 2012/130429 A2.

Die DE 10 2011 051 918 A1 beschreibt einen ähnlichen Aufbau: auch hier ist die PV-Zelle semitransparent oder transparent und von dem dahinter angeordneten Wärmeübertrager thermisch und elektrisch isoliert, u. a. durch ein Vakuum oder Gas.

Auch in der US 2010/288334 A1 wird ein Aufbau beschrieben, in der sich ein z. B. mit CO₂ gefüllter Raum zwischen dem PV-Modul und dem dahinter angeordneten Wärmeübertrager befindet.

Die Dokumente FR 2 998 095, US 2014/014162 und CN 102 664 209 offenbaren auch solche Photovoltaik-Thermie-Module.

Auch diese Aufbauten sind nicht vorteilhaft für die oben beschriebene Aufgabenstellung dieser Erfindung.

Die Aufgabenstellung wird mit den Merkmalen des Anspruchs 1 gelöst. Diese sehen vor, dass das Photovoltaik-Thermie-Modul aus einem Photovoltaikmodul besteht, auf dessen in Gebrauchsstellung von der Sonne abgewandten Rückseite sich ein Wärmeübertrager befindet. Der Wärmeübertrager besteht aus einer oder mehreren von dem Wärmeträgerfluid durchströmten Leitung(en). Die Leitungen sind - ggf. durch Wärmeübertragerflächen in der Oberfläche zur Umgebungsluft vergrößert - so angeordnet, dass sie sowohl in gutem Kontakt mit der Umgebungsluft stehen, als auch thermisch leitend mit dem PV-Modul verbunden sind. Dabei wird die Oberfläche und der Wärmeaustausch zur Umgebungsluft gegenüber der Oberfläche des Photovoltaikmoduls dadurch vergrößert, dass die Flächen des Wärmeübertragers in der Hauptausrichtung nicht parallel sondern quer zu Ebene des Photovoltaikmoduls, d. h. senkrecht oder schräg zum PV-Modul angeordnet sind. Freiräume zwischen den Flächen des Wärmeübertragers sind vorgesehen. Zum Nutzen des Photovoltaik-Thermie-Moduls als Niedertemperatur-Wärmequelle für eine Wärmepumpe ermöglichen die Freiräume zwischen den Flächen des Wärmeübertragers den Zugang der Umgebungsluft bis zum Photovoltaikmodul. Die Flächen des Wärmeübertragers aufweisen einen Abstand zwischen 10 - 50 mm und liegen ohne flächige Belegung und Verbindung direkt auf dem Photovoltaikmodul auf. Um eine gute Umströmung sowohl des Wärmeübertragers als auch der Rückseite des PV-Moduls mit Umgebungsluft zu ermöglichen, ist der Wärmeübertrager so angeordnet und ausgerichtet, dass er den Zugang der Umgebungsluft zum PV-Modul nicht oder wenig behindert, was durch die Hauptausrichtung (senkrecht oder schräg zum PV-Modul) gegeben ist.

Die Leitung(en), soweit sie mit oberflächenvergrößernden Wärmeübertragerflächen versehen sind, befinden sich in einem gewissen Abstand vom PV-Modul, beispielsweise in der Mitte zwischen der Außenkante der Wärmeübertragerflächen und dem PV-Modul. Der Abstand der Außenkante der Wärmeübertragerflächen vom PV-Modul kann beispielsweise 100 mm betragen oder vorzugsweise die typische Rahmenhöhe von Photovoltaikmodulen von 30 bis 60 mm.

Die Leitung(en) befinden sich so in einem Bereich, in dem Umgebungsluft besser zirkulieren kann als geschützt direkt hinter dem PV-Modul. Weiterhin sind auf diese Weise die Wärmeleitwege von der Außenkante der Wärmeübertragerflächen zu der/den Leitunge(en) und vom PV-Modul zu der/den Leitungen ähnlich, was einen reduzierten Materialeinsatz für die Wärmeübertragerflächen ermöglicht. Beispiel: Würden sich die Leitungen direkt auf der Rückseite des PV-Moduls befinden, so wäre der Wärmeleitweg von der Außenkante der Wärmeübertragerfläche zur Leitung doppelt so groß wie wenn sich die Leitung in der Mitte der Wärmeübertragerfläche, also zwischen PV-Modul und Außenkante befindet. Für den gleichen Temperaturabfall bei Wärmeleitung kann die Wärmeübertragerfläche bei Position in der Mitte halb so dick sein.

Der erfindungsgemäße Aufbau gemäß Anspruch 1 kann unter anderem durch folgende Ausgestaltungen realisiert werden:
1. Auf der Rückseite des PV-Moduls befindet sich ein Wärmeübertrager, der aus einer oder mehreren Leitungen und darauf aufgebrachten Wärmeübertragerflächen besteht. Eine verbreitete, in industriellen Prozessen hergestellte Bauform ist ein Lamellen-Luft-Wärmeübertrager. Die Lamellen liegen auf dem PV-Modul auf und stehen damit in thermisch leitendem Kontakt mit dem PV-Modul. Zur Sicherstellung des Kontakts können die Lamellen auf das PV-Modul geklebt werden. Übliche Lamellen-Wärmeübertrager sind außen mit stabilen Endblechen abgeschlossen. Bei angepasster Formgebung dieser Endbleche können sie direkt zur mechanischen Fixierung des Lamellen-Luft-Wärmeübertragers an dem PV-Modul verwendet werden.
   Es ist möglich aber nicht notwendig, den Rand der Lamellen auf der Seite, die auf dem PV-Modul aufliegt, um 90° abzukanten, was den Wärmeübergang verbessert, und diese abgekanteten Flächen können zudem auf das PV-Modul geklebt werden.
2. Auf der Rückseite des PV-Moduls sind ein oder mehrere Strangpress- bzw. Extrusionsprofile auflaminiert. Das Strangpressprofil ist so geformt, dass es in einem Abstand vom PV-Modul die Leitung vorzugsweise durch Einclipsen gut wärmeleitend aufnimmt. Weiterhin ist das Strangpressprofil vorzugsweise mit oberflächenvergrößernden Rippen versehen.
3. Eine weitere mögliche Umsetzung der Erfindung ist die Verwendung eines oder mehrerer Rippenrohre, die in thermisch leitendem Kontakt mit dem PV-Modul stehen. Hierfür ist es möglich, den Rand der Rippen auf der Seite, die auf dem PV-Modul aufliegt, um 90° umzulegen, und diese Flächen dann auf das PV-Modul zu kleben.
4. Ein ähnlicher Aufbau ist unter Verwendung einer oder mehrerer Drahtwärmeaustauscherrohre möglich, wie sie z. B. in Unterflurkonvektoren eingesetzt werden. Aufbau Drahtwärmetauscher siehe z. B.: Verkaufsprospekt der Fa. ISAN Radiätory s.r.o., Tschechische Republik, www.isan.cz: "ISAN TERMO floor convectors, Stand 2013/2014 01", Seite 2, abgerufen unter http://www.isan.cz/getattachment/Produkty/Termo-activ/Leaflet-TERMO-EN.pdf.aspx
5. Als Alternative zu Lamellenkühlern sind "Micro-Channel Profile"-Luftwärmetauscher bekannt, siehe z. B. http://aluventa.dk/oder Verkaufsprospekt der Firma Aluventa, Dänemark "Aluventa Design Guideline, Version : 003, Date : 01-10-2012" abgerufen unter http://aluventa.dk/wpcontent/uploads/2014/01/Aluventa_Design_Guideline_v003_121001.pdf. Es handelt sich im Prinzip um filigrane Doppelstegplatten, d. h., flache Hohlprofile, deren gegenüberliegende, einen Hohlraum begrenzende Flächen durch Stege miteinander verbunden sind. Die Hohlprofile sind von dem Wärmeträgerfluid durchströmt. Sie befinden sich zwischen zwei Sammlerrohren. Auch solche Doppelsteglprofil-Wärmeübertrager können auf der Rückseite des PV-Moduls angebracht werden, z. B. durch mechanische Pressung, vorzugsweise kombiniert mit Klebung. Da die Wärmeleitwege hier sehr kurz sind (Wärmeleitung nur durch die Wand der Profile) kann dieser Aufbau auch in Kunststoff, d. h., mit Kunststoff-Doppelstegplatten realisiert werden.

Die typischen Abstände zwischen den Lamellen, Rippen oder Micro-Channel-Profilen liegen bei ca. 5 bis 50 mm, insbesondere bei ca. 10 bis 25 mm, wodurch die freie Konvektion der Umgebungsluft ermöglicht wird und die Zwischenräume durch Vereisung nicht verschlossen werden.

Insbesondere bei den beschriebenen Ausführungen, wo der Kontakt zwischen Wärmeübertrager und Photovoltaikmodul in dem genannten engen Abstand (10 bis 25 mm) vorliegt, ist es nicht nötig, das Photovoltaikmodul flächig mit dem Wärmeübertrager zu verbinden und zu bedecken, denn die Wärmeleitwege im Photovoltaikmodulo zum Wärmeübertrager sind ausreichend kurz: z. B. bei einem Lamellen-Luft-Wärmeübertrager mit einem Lamellenblechabstand von 12 mm beträgt der max. Wärmeleitweg 6 mm bei einer üblichen Glasdicke von 3 mm. Dies ermöglicht eine vorteilhafte Ausgestaltung der Erfindung: Das Photovoltaikmodul ist zwischen den PV-Zellen transparent und der Wärmeübertrager ist dunkel oder besser noch selektiv beschichtet. D. h., dass durch die transparenten Stellen des Photovoltaikmoduls tretende Solarstrahlung auf den beschichteten Flächen des Wärmeübertragers gut absorbiert wird, und - bei selektiver Beschichtung - nur wenig Infrarotstrahlung emittiert. Auf diese Weise wird das PV-Modul nicht unnötig erwärmt und dieser Teil der Strahlung dennoch zur Wärmebereitstellung genutzt.

Typische Materialien des Photovoltaik-Thermie-Moduls sind (in Klammern die Bezugszeichen der unten vorgestellten Figuren):
- Kanalstruktur oder Leitung (5) und Sammlerrohr (9): Kupfer, Edelstahl, Aluminium oder Kunststoff,
- Wärmeübertragerflächen (6), Lamellenbleche (12): Aluminium, Kupfer,
- Endblech (14) des Lamellen-Luft-Wärmeübertragers: Aluminium,
- Rahmen-Klemmprofil (15): Aluminium, Kunststoff,
- Doppelstegplatten oder "Micro-channel-Profile (8): Aluminium, Kunststoff, Edelstahl,
- Rippenrohr: Aluminium, Kupfer,
- Profil (11): Aluminium,
- Kleber (16): Silikon, Kunstharz, Epoxidharz, jeweils ggf. mit wärmeleitenden, z. B. metallischen Füllstoffen angereichert oder, bei flächiger Klebung, doppelseitige Klebefolie.

Das Photovoltaik-Thermie-Modul ist vorzugsweise mit Wärmepumpen gekoppelt. Die thermische Kopplung erfolgt vorzugsweise über Sole als Wärmeträgerfluid, die durch den Sole-Kältemittel-Wärmeübertrager (= Verdampfer) einer Sole-Wasser-Wärmepumpe fließt. Bei Betrieb in Klimaregionen und Anwendung, bei denen der Gefrierpunkt von Wasser nicht unterschritten wird, kann auch Wasser als Wärmeträgerfluid und eine Wasser-Wasser-Wärmepumpe verwendet werden.

Ein andere - effizientere - Möglichkeit der Kopplung besteht darin, dass das Kältemittel der Wärmepumpe direkt durch die Leitung(en) des PVT-Moduls strömt. Dies erspart eine Umwälzpumpe und einen Wärmeübertrager mit dem damit verbundenen Temperaturabfall.

Die Vorteile der Erfindung sind:
- hoher Wärmedurchgangskoeffizient von Umgebungsluft zum Wärmeträgermedium,
- kostengünstig in Herstellung durch den entsprechend der Aufgabenstellung bzgl. Wärmeübertragung von der Umgebungsluft optimierten Aufbau und Ermöglichung industrieller Fertigungsverfahren,
- Minimierung von thermischen Spannungen, übertragen durch die Wärmeübertragerstruktur auf das PV-Modul, u. a. bei Thermoschock: außer bei dem Konzept mit Strangpressprofilen besteht keine flächige Belegung und Verbindung des PV-Moduls mit dem Wärmeübertrager.

Bei Einsatz von Lamellenblechen sind die Bleche vorzugsweise wellenförmig gekantet, so dass eine Längenausdehnung oder Kompression aufgenommen werden kann. Weiterhin müssen die Bleche nicht über die gesamte Länge aus einem Stück gefertigt sein, sondern z. B. aus zwei oder mehreren Stücken. Ebenso werden in der zweiten oben vorgestellten Ausgestaltung mit Strangpressprofilen diese vorzugsweise in Streifen realisiert und auch diese Streifen müssen nicht über die gesamte Länge oder Breite des PV-Moduls verlaufen, sondern können z. B. in zwei oder mehrere Stücke aufgeteilt sein.
- Aufgrund der Anordnung der Leitung(en) in Abstand zum PV-Modul ist hier - im direkten Kontakt zur Umgebungsluft - die kälteste Stelle. Das PV-Modul selbst befindet sich am Ende der Wärmeübertragerflächen so dass seine Temperatur näher bei der Umgebungslufttemperatur liegt. Damit wird erreicht, dass Vereisung v. a. im Bereich um die Leitung(en) auftritt und minimiert an dem PV-Modul, welches aber dennoch direkt mit dem Wärmeübertrager gekoppelt ist, und zum Wärmeeintrag durch Luft, Feuchtigkeit, Regen und Strahlung beiträgt.
- Durch die direkte Kopplung von PV-Modul und Wärmeübertrager ist das PV-Modul auch ohne Kühlung des Moduls durch das Wärmeträgerfluid gut durch Umgebungsluft gekühlt.
- Standard-PV-Module, insbesondere Laminate ohne Rahmen können zur Umsetzung der Erfindung eingesetzt werden, indem der Luft-Wärmeübertrager in einem nachgelagerten Produktionsprozess aufgebracht wird, wodurch von der Kostendegression der PV-Module profitiert wird.

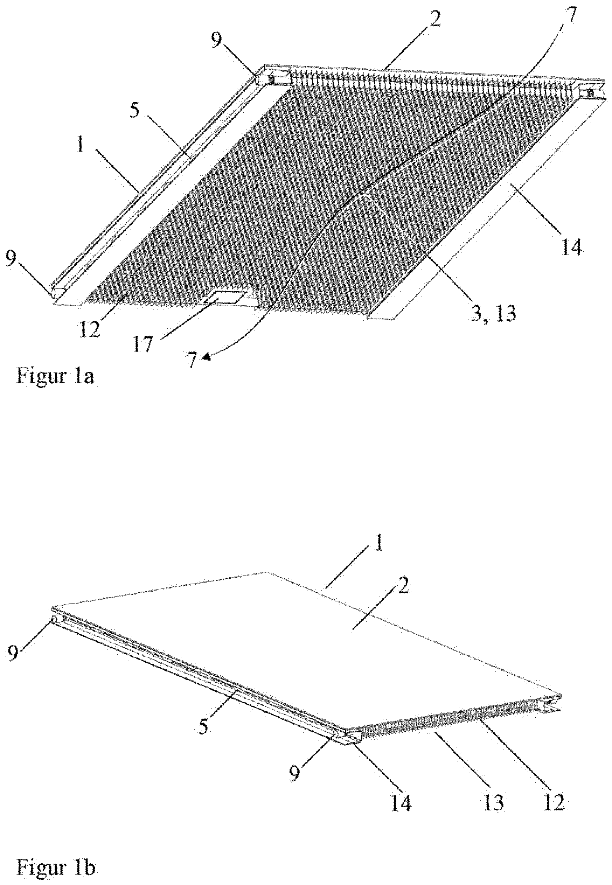

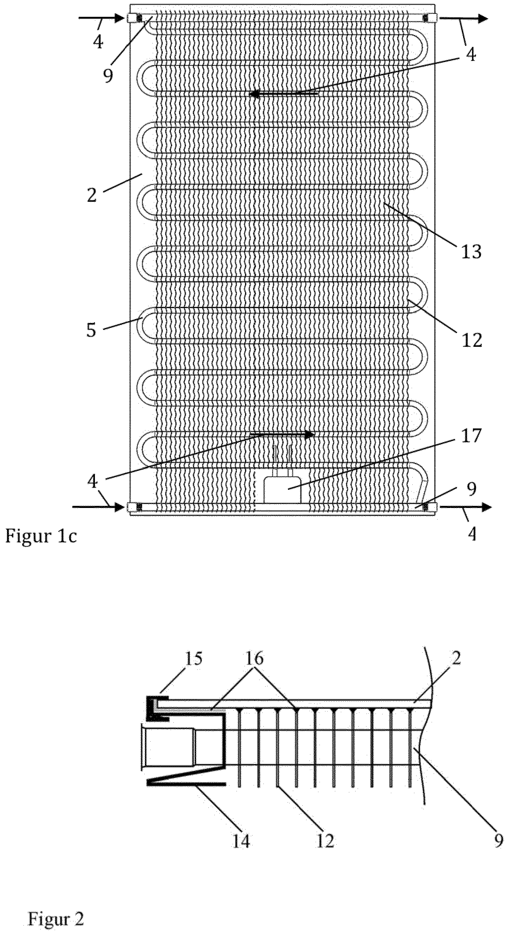

Im Folgenden werden anhand der Figuren 1 bis 8 konkrete Ausgestaltungen der Erfindung beschrieben.

Die Figuren 1a, b und c zeigen ein Photovoltaik-Thermie-Modul 1 gemäß Anspruch 1 und 7 bis 9. Figur 1a stellt die Ansicht des Moduls ist von oben dar, 1b von schräg unten und 1c die Aufsicht von unten.

Der Wärmeübertrager 3 ist hier als Lamellen-Luft-Wärmeübertrager 13 ausgestaltet und befindet sich auf der Unterseite des Photovoltaikmoduls 2. Er besteht aus einer mäanderförmigen Leitung 5 (siehe Figur 1c), die oben und unten mit jeweils einem Sammlerrohr 9 verbunden ist. Die Sammlerrohre 9 ermöglichen die einfache Parallelverschaltung mehrerer Module. Die Leitung 5 und die Sammlerrohre 9 durchdringen senkrecht eine Reihe parallel verlaufender wellenförmiger Lamellenbleche 12. Seitlich ist der Lamellen-Luft-Wärmeübertrager 13 begrenzt durch jeweils ein Endblech 14 (nicht dargestellt in Figur 1c). Die Endbleche 14 stabilisieren das Photovoltaikmodul 2, und können zur Fixierung des Photovoltaik-Thermie-Moduls 1 auf einem Montagegestell genutzt werden, d.h., ein eigener Rahmen wird nicht benötigt. Weiterhin schützen sie den Lamellen-Luft-Wärmeübertrager 13 vor Beschädigungen bei der Montage. Innerhalb der horizontalen Einbuchtungen der Endbleche 14 verlaufen die 180°-Bögen der mäanderförmigen Leitung.

Die Lamellenbleche 12 sind an der Stelle, an der sich eine elektrische Anschlussdose 17 des Photovoltaikmoduls 2 befindet, kürzer, so dass Platz für die Anschlussdose bleibt. Die Leitung 5 kann so geformt sein, dass sie neben der Anschlussdose 17 verläuft (siehe Figur 1c), sie kann aufgrund ihres Abstands vom Photovoltaikmodul 2 aber auch über die Anschlussdose 17 verlaufen (nicht dargestellt). Die Anschlussdose ist in Figur 1a und c unten dargestellt, sie kann aber auch oben angeordnet sein.

Die obere und untere Stirnseite des Photovoltaik-Thermie-Moduls 1 sind offen, d. h., ohne Rahmen. So kann Umgebungsluft 7 die Rückseite des Photovoltaik-Thermie-Moduls mit Luft-Wärmeübertrager 1 frei umströmen und in die Zwischenräume des Lamellen-Luft-Wärmeübertragers 13 eindringen (siehe Figur 1a). Sie wird dabei abgekühlt und sinkt nach unten ab. Das innerhalb von Sammler 9 und Leitung 5 strömende Wärmeträgermedium 4 strömt zwecks sicherer Entlüftung i. d. R. von unten nach oben, so dass sich ein effizienter Gegenstrom- oder Kreuzgegenstromwärmeaustausch zwischen Umgebungsluft 7 und Wärmeträgermedium 4 einstellt (siehe Figur 1c).

Das Photovoltaik-Thermie-Modul 1 ist in Figur 1a, b, c hochkant dargestellt. Es ist erfindungsgemäß ebenso möglich, das Photovoltaik-Thermie-Modul 1 quer aufzubauen, wobei die Lamellenbleche vorzugsweise ebenfalls senkrecht von oben nach unten verlaufen und die Leitungen 5 horizontal, um eine gute Entlüftung der Leitung 5 und eine vertikale Umströmung mit Umgebungsluft 7 zu ermöglichen.

Figur 2 zeigt einen Ausschnitt des in Figur 1 dargestellten Photovoltaik-Thermie-Moduls 1. Das Endblech 14, das vorzugsweise als Alu-Strangpressprofil hergestellt ist, ist mithilfe eines Rahmen-Klemmprofils 15 mit dem Photovoltaikmodul 2 verbunden. Die Lamellenbleche 12 und das Endblech 14 sind zusätzlich mit dem Photovoltaikmodul 2 durch einen Kleber 16 verklebt. Das Sammlerrohr 9 hat an der linken Außenseite eine Aufweitung zur Aufnahme eines Steckverbinders zur Kopplung mit dem nächsten Modul.

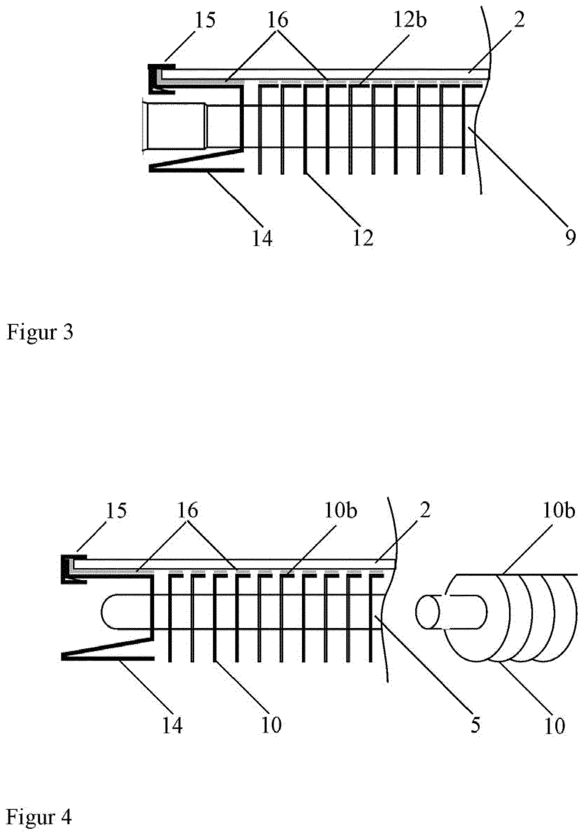

Figur 3 zeigt den gleichen Ausschnitt wie Figur 2. Hier sind die Lamellenbleche 12 an der Seite, an der sie am PV-Modul 2 aufliegen, abgekantet. Die abgekanteten Bereiche 12b ermöglichen eine flächige Verbindung mit dem PV-Modul, d. h., verbesserte Wärmeabfuhr und ggf. einfacheres Auftragen des Klebers 16, z. B. in Form einer doppelseitigen Klebefolie.

Figur 4 zeigt den Aufbau des Photovoltaik-Thermie-Moduls 1 realisiert mit einem Rippenrohr. Die Rippen 10 sind an der Seite, an der sie am PV-Modul 2 aufliegen, abgekantet, was während des Biegeprozesses des Rippenrohrs geschehen kann. Die abgekanteten oder umgelegten Bereiche 10b ermöglichen eine flächige Verbindung mit dem PV-Modul analog wie oben für die Lamellenbleche 12 in Figur 3 beschrieben. Das Rippenrohr 10 kann z. B. mäanderförmig gebogen sein, analog dem in Figur 1c dargestellten Aufbau.

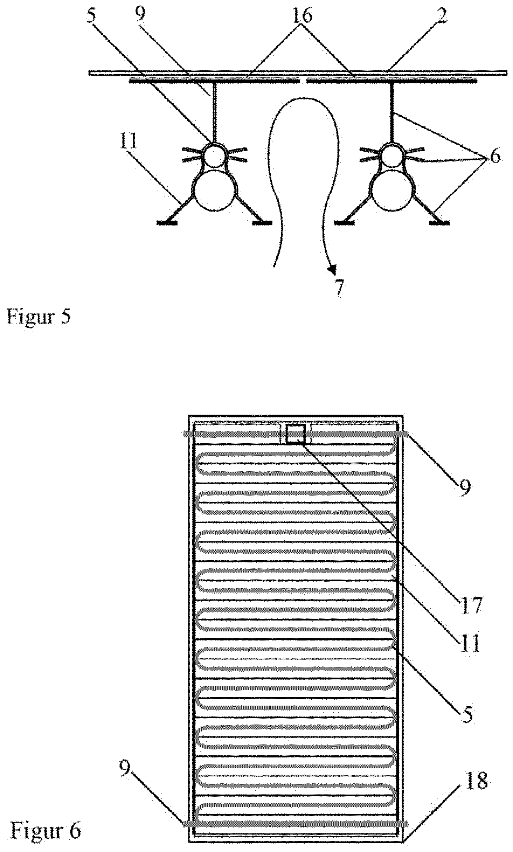

Figur 5 zeigt den Aufbau des Photovoltaik-Thermie-Moduls 1 realisiert mit Strangpressprofilen: Auf der Rückseite des PV-Moduls sind mehrere Strangpressprofile 11 mit flächigem Kontakt zum PV-Modul 2 mit dem Kleber 16 auflaminiert. In einem Abstand vom PV-Modul wird die Leitung 5 durch Einclipsen gut wärmeleitend aufgenommen. In einer darüber sich befindenden Profilerweiterung wird das Sammlerrohr 9 ebenfalls durch Einclipsen aufgenommen. Weiterhin ist das Strangpressprofil mit oberflächenvergrößernden Wärmeübertragerflächen 6 versehen. Unten weist das Profil Verbreiterungen auf, die bei der Montage als stabile Auflage dienen. Umgebungsluft 7 kann zwischen den Profilen 11 bis zum Photovoltaikmodul 2 strömen.

Figur 6 zeigt die Rückseite des entsprechend Figur 5 aufgebauten Photovoltaik-Thermie-Moduls. Das Profil 11 ist in parallel verlaufenden Stücken auflaminiert, an der elektrischen Anschlussdose 17 entsprechend kürzer. Eine mäanderförmig gebogene Leitung 5 sowie die zwei Sammlerrohre 9 sind in das Profil 11 eingeclipst. Das Photovoltaik-Thermie-Modul ist von dem Rahmen 18 umschlossen.

Das Photovoltaik-Thermie-Modul 1 ist in Figur 6 hochkant dargestellt. Es kann ebenso quer aufgebaut werden, wobei die Profile 11 mit den Leitungen 5 für eine gute Entlüftung vorzugsweise weiterhin horizontal angeordnet sind.

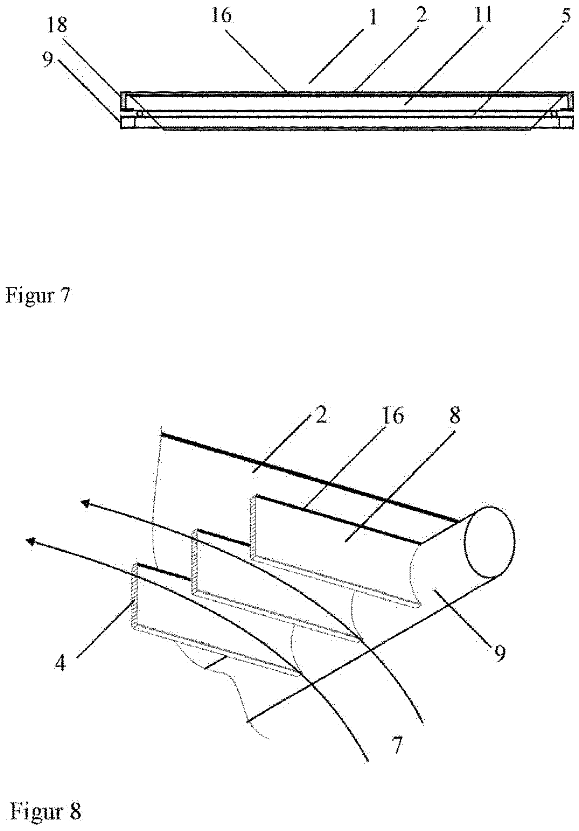

Figur 7 zeigt einen Schnitt des entsprechend Figur 5 und 6 aufgebauten Photovoltaik-Thermie-Moduls 1. Die Profile 11, die mit dem Kleber 16 auf das PV-Modul 2 geklebt sind, ragen nach unten über den Rahmen 18 des Photovoltaik-Thermie-Moduls 1 hinaus, so dass sie gut von Umgebungsluft umströmt werden können. Die Profile weisen rechts und links 45°-Schägen auf, so dass die 180°-Bögen der mäanderförmig gebogenen Leitung 5 außerhalb des Profils verlaufen können. Unterhalb der Leitung 5 sind die Sammlerrohre 9 angebracht.

Figur 8 zeigt von unten gesehen den Aufbau des Photovoltaik-Thermie-Moduls 1 realisiert mit "Micro-Channel"- oder "Doppelsteg"-Profilen. Die Doppelstegprofile 8 sind als flache Hohlprofile aufgebaut, deren beide gegenüberliegende begrenzende Flächen durch Stege miteinander verbunden sind. Die Doppelstegprofile 8 sind von dem Wärmeträgerfluid 4 durchströmt. Sie befinden sich zwischen zwei Sammlerrohren 9 (hier nur der Ausschnitt mit einem Sammlerrohr dargestellt). Die Doppelstegprofile 8, werden parallel von dem Wärmeträgerfluid 4 durchströmt. Sie sind mit der Rückseite des PV-Moduls 2 in Kontakt und mit dem Kleber 16 verbunden. Umgebungsluft 7 kann die Doppelstegprofile 8 und das Photovoltaikmodul 2 umströmen.

Statt der beschriebenen Ausführungen sind erfindungsgemäß auch andere Ausführungen möglich: z. B. sind nach Anspruch 1 auch andere vom Wärmeträgermedium durchströmte Wärmeübertrager möglich, z. B. im Rollbondverfahren hergestellte Wärmeübertrager. Statt der in den Figuren 1 bis 7 dargestellten mäanderförmigen Verrohrung sind andere Verrohungsarten möglich, z. B. mit Paralleldurchströmung wie im Aufbau gemäß Figur 8. Umgekehrt kann der Aufbau mit Doppelstegprofilen auch anders als zwischen zwei Sammlerrohren 9 realisiert sein, z. B. in Mäanderform.

### Bezugszeichenliste

- 1: Photovoltaik-Thermie-Modul mit Luft-Wärmeübertrager
- 2: Photovoltaikmodul
- 3: Wärmeübertrager
- 4: Wärmeträgerfluid
- 5: Kanalstruktur oder Leitung für Wärmeträgerfluid
- 6: Oberflächenvergrößernde Wärmeübertragerfläche zur Umgebungsluft
- 7: Umgebungsluft
- 8: Doppelstegprofil oder "Micro-channel-Profil
- 9: Sammlerrohr
- 10: Rippe von Rippenrohr, 10 b: umgelegter Teil
- 11: Profil
- 12: Lamellenblech, 12 b: abgekanteter Teil
- 13: Lamellen-Luft-Wärmeübertrager
- 14: Endblech des Lamellen-Luft-Wärmeübertragers
- 15: Rahmen-Klemmprofil
- 16: Kleber
- 17: Elektrische Anschlussdose
- 18: Rahmen des Photovoltaik-Thermie-Moduls

## Patentansprüche

1. Photovoltaik-Thermie-Modul (1) zur kombinierten Strom- und Wärmeerzeugung, aufweisend ein Photovoltaikmodul (2), auf dessen in Gebrauchsstellung der Sonne abgewandten Rückseite sich ein Wärmeübertrager (3) befindet, wobei der Wärmeübertrager (3) zumindest eine von dem flüssigen oder gasförmigen Wärmeträgerfluid (4) durchströmte Kanalstruktur oder Leitung (5) beinhaltet, welche sich in einem Abstand vom Photovoltaikmodul (2) befindet, wobei die mindestens eine Kanalstruktur oder Leitung (5) sowohl in direktem Kontakt mit der Umgebungsluft (7) steht, als auch thermisch leitend mit dem Photovoltaikmodul (2) verbunden ist, wobei die mit der Umgebungsluft (7) in Kontakt stehenden Flächen des Wärmeübertragers (3) quer zu der Erstreckungsebene des Photovoltaikmoduls (2) angeordnet und Freiräume zwischen den Flächen des Wärmeübertragers (3) vorgesehen sind, **dadurch gekennzeichnet, dass** zum Nutzen des Photovoltaik-Thermie-Moduls (1) als Niedertemperatur-Wärmequelle für eine Wärmepumpe die Freiräume zwischen den Flächen des Wärmeübertragers (3) den Zugang der Umgebungsluft (7) bis zum Photovoltaikmodul (2) ermöglichen und dass die Flächen des Wärmeübertragers (3) einen Abstand zwischen 10 - 50 mm aufweisen und ohne flächige Belegung und Verbindung direkt auf dem Photovoltaikmodul (2) aufliegen.

2. Kombiniertes Photovoltaik-Thermie-Modul (1), nach Anspruch 1, **dadurch gekennzeichnet, dass** der Wärmeübertrager (3) aus Doppelstegprofilen (8), die quer zum Photovoltaikmodul (2) angeordnet sind, aufgebaut ist.

3. Kombiniertes Photovoltaik-Thermie-Modul (1), nach Anspruch 1 oder 2, **dadurch gekennzeichnet, dass** die mindestens eine Kanalstruktur oder Leitung (5) des Wärmeübertragers (3) zur Umgebungsluft oberflächenvergrößernde Wärmeübertragerflächen (6) aufweist.

4. Kombiniertes Photovoltaik-Thermie-Modul (1), nach Anspruch 3, **dadurch gekennzeichnet, dass** der Wärmeübertrager (3) mindestens eine Leitung (5) mit oberflächenvergrößerten Rippen (10) - sogenannte Rippenrohre - aufweist.

5. Kombiniertes Photovoltaik-Thermie-Modul (1), nach Anspruch 3, **dadurch gekennzeichnet, dass** der Wärmeübertrager (3) mindestens eine Leitung (5) mit oberflächenvergrößerten Drähten - sogenannte Drahtwärmetauscherrohre - aufweist.

6. Kombiniertes Photovoltaik-Thermie-Modul (1), nach Anspruch 1 oder 3, **dadurch gekennzeichnet, dass** auf der Rückseite des Photovoltaikmoduls (2) mindestens ein vorzugsweise im Extrusionsverfahren hergestelltes Profil (11) aus gut wärmeleitendem Material auflaminiert ist und das Profil (11) so geformt ist, dass es in einem Abstand vom Photovoltaikmodul (2) die mindestens eine Leitung (5) gut wärmeleitend aufnimmt, wobei das Profil (11) mit zur Umgebungsluft (7) oberflächenvergrößernden Wärmeübertragerflächen (6) bzw. Rippen versehen sein kann.

7. Kombiniertes Photovoltaik-Thermie-Modul (1), nach Anspruch 6, **dadurch gekennzeichnet, dass** die mindestens eine Leitung (5) und/oder das mindestens eine Sammlerrohr (9) in clipsförmigen Aufnahmen des Profils (11) befestigt sind.

8. Kombiniertes Photovoltaik-Thermie-Modul (1), nach Anspruch 1 oder 3, **dadurch gekennzeichnet, dass** der Wärmeübertrager (3) als Lamellen-Luft-Wärmeübertrager (13) ausgestaltet ist, der eine oder mehrere Leitungen (5) und darauf aufgebrachte Lamellenbleche (12) umfasst, und sich die Lamellenbleche (12) in thermisch leitendem Kontakt mit dem Photovoltaikmodul (2) befinden.

9. Kombiniertes Photovoltaik-Thermie-Modul (1), nach Anspruch 8, **dadurch gekennzeichnet, dass** Endbleche (14) des Lamellen-Luft-Wärmeübertragers (13) so gestaltet sind, dass sie direkt zur Fixierung des Lamellen-Luft-Wärmeübertragers an dem Photovoltaikmodul dienen und den Rahmen (18) des Photovoltaikmoduls ersetzen.

10. Kombiniertes Photovoltaik-Thermie-Modul (1), nach einem der Ansprüche 4, 8 oder 9, **dadurch gekennzeichnet, dass** der Rand der Rippen (10) bzw. der Lamellenbleche (12) auf der zum Photovoltaikmodul (2) gewandten Seite abgekantet ist, und hierdurch mit vergrößerter Auflagefläche (10b, 12b) flächig zum Photovoltaikmodul anliegt.

11. Kombiniertes Photovoltaik-Thermie-Modul (1), nach einem der Ansprüche 1 bis 10, **dadurch gekennzeichnet, dass** der thermisch leitende Kontakt zwischen Wärmeübertrager (3) und Photovoltaikmodul (2) durch mechanische Pressung kombiniert mit Klebung realisiert ist.

12. Kombiniertes Photovoltaik-Thermie-Modul (1), nach einem der Ansprüche 1 bis 11, **dadurch gekennzeichnet, dass** das Photovoltaikmodul (2) zwischen den PV-Zellen transparent ist und der Wärmeübertrager (3) dunkel, d. h. Solarstrahlung absorbierend, ausgestaltet ist.

13. Kombiniertes Photovoltaik-Thermie-Modul (1), nach einem der Ansprüche 1 bis 11, **dadurch gekennzeichnet, dass** das Photovoltaikmodul (2) zwischen den PV-Zellen transparent ist und der Wärmeübertrager (3) selektiv beschichtet ist, d. h. Solarstrahlung absorbierend bei reduzierter Emission von Infrarotstrahlung.

14. Kombiniertes Photovoltaik-Thermie-Modul (1), nach einem der Ansprüche 1 bis 13, **dadurch gekennzeichnet, dass** das Photovoltaik-Thermie-Modul (1) mit einer Wärmepumpe gekoppelt ist und das Kältemittel der Wärmepumpe direkt durch die Leitung(en) (5) des Photovoltaik-Thermie-Moduls (1) strömt.

## Claims

1. Photovoltaic thermal module (1) for combined generation of electricity and heat, comprising a photovoltaic module (2), on the back side of which facing away from the sun in the position of use a heat exchanger (3) is situated, wherein the heat exchanger (3) includes at least one duct structure or conduit (5) through which the liquid or gaseous heat transfer fluid (4) flows and which is situated at a distance from the photovoltaic module (2), wherein the at least one duct structure or conduit (5) is both in direct contact with the ambient air (7) and thermally conductively connected to the photovoltaic module (2), wherein the surfaces of the heat exchanger (3) that are in contact with the ambient air (7) are arranged transversely with respect to the plane of extent of the photovoltaic module (2) and free spaces are provided between the surfaces of the heat exchanger (3), **characterized in that** in order to use the photovoltaic thermal module (1) as a low-temperature heat source for a heat pump, the free spaces between the surfaces of the heat exchanger (3) allow the ambient air (7) to have access as far as the photovoltaic module (2), and **in that** the surfaces of the heat exchanger (3) have a distance of between 10 - 50 mm and bear directly on the photovoltaic module (2) without areal coverage and connection.

2. Combined photovoltaic thermal module (1), according to Claim 1, **characterized in that** the heat exchanger (3) is constructed from twin-wall profiles (8) arranged transversely with respect to the photovoltaic module (2).

3. Combined photovoltaic thermal module (1), according to Claim 1 or 2, **characterized in that** the at least one duct structure or conduit (5) of the heat exchanger (3) has heat exchanger surfaces (6) that increase the surface area to the ambient air.

4. Combined photovoltaic thermal module (1), according to Claim 3, **characterized in that** the heat exchanger (3) has at least one conduit (5) with fins (10) having increased surface area - so-called finned tubes.

5. Combined photovoltaic thermal module (1), according to Claim 3, **characterized in that** the heat exchanger (3) has at least one conduit (5) with wires having increased surface area - so-called wire wound finned tubes.

6. Combined photovoltaic thermal module (1), according to Claim 1 or 3, **characterized in that** at least one profile (11) composed of material having good thermal conductivity, said at least one profile preferably being produced using the extrusion method, is laminated on the back side of the photovoltaic module (2), and the profile (11) is shaped such that it receives the at least one conduit (5), in a manner exhibiting good thermal conductivity, at a distance from the photovoltaic module (2), wherein the profile (11) can be provided with heat exchanger surfaces (6) or fins that increase the surface area to the ambient air (7).

7. Combined photovoltaic thermal module (1), according to Claim 6, **characterized in that** the at least one conduit (5) and/or the at least one collector tube (9) are/is secured in clip-type receptacles of the profile (11).

8. Combined photovoltaic thermal module (1), according to Claim 1 or 3, **characterized in that** the heat exchanger (3) is configured as a lamella-air heat exchanger (13) comprising one or more conduits (5) and lamella plates (12) applied thereto, and the lamella plates (12) are in thermally conductive contact with the photovoltaic module (2).

9. Combined photovoltaic thermal module (1), according to Claim 8, **characterized in that** end plates (14) of the lamella-air heat exchanger (13) are fashioned such that they serve directly for fixing the lamella-air heat exchanger to the photovoltaic module and replace the frame (18) of the photovoltaic module.

10. Combined photovoltaic thermal module (1), according to any of Claims 4, 8 or 9, **characterized in that** the edge of the fins (10) or of the lamella plates (12), respectively, is bent away on the side facing the photovoltaic module (2), and as a result lies with an enlarged bearing surface (10b, 12b) areally with respect to the photovoltaic module.

11. Combined photovoltaic thermal module (1), according to any of Claims 1 to 10, **characterized in that** the thermally conductive contact between heat exchanger (3) and photovoltaic module (2) is realized by means of mechanical pressing combined with adhesive bonding.

12. Combined photovoltaic thermal module (1), according to any of Claims 1 to 11, **characterized in that** the photovoltaic module (2) is transparent between the PV cells, and the heat exchanger (3) is configured to be dark, i.e. to absorb solar radiation.

13. Combined photovoltaic thermal module (1), according to any of Claims 1 to 11, **characterized in that** the photovoltaic module (2) is transparent between the PV cells, and the heat exchanger (3) is coated selectively, i.e. so as to absorb solar radiation with reduced emission of infrared radiation.

14. Combined photovoltaic thermal module (1) according to any of Claims 1 to 13, **characterized in that** the photovoltaic thermal module (1) is coupled to a heat pump, and the refrigerant of the heat pump flows directly through the conduit(s) (5) of the photovoltaic thermal module (1).

## Revendications

1. Module thermique photovoltaïque (1) permettant la production combinée d'électricité et de chaleur, comportant un module photovoltaïque (2) dont la face arrière, opposée au soleil en position d'utilisation, est équipée d'un échangeur de chaleur (3), dans lequel l'échangeur de chaleur (3) comporte au moins une structure de canal ou une conduite (5) traversée par le fluide caloporteur liquide ou gazeux (4) et qui est située à distance du module photovoltaïque (2), dans lequel ladite au moins une structure de canal ou conduite (5) est à la fois en contact direct avec l'air ambiant (7) et reliée de manière thermiquement conductrice au module photovoltaïque (2), dans lequel les surfaces de l'échangeur de chaleur (3) en contact avec l'air ambiant (7) sont disposées transversalement au plan dans lequel s'étend le module photovoltaïque (2) et des espaces libres sont prévus entre les surfaces de l'échangeur de chaleur (3), **caractérisé en ce que**, pour utiliser le module thermique photovoltaïque (1) comme source de chaleur à basse température destinée à une pompe à chaleur, les espaces libres entre les surfaces de l'échangeur de chaleur (3) permettent à l'air ambiant (7) d'atteindre le module photovoltaïque (2) et **en ce que** les surfaces de l'échangeur de chaleur (3) présentent un espacement compris entre 10 et 50 mm et reposent directement sur le module photovoltaïque (2) sans couverture de la surface ni connexion en surface du module.

2. Module photovoltaïque-thermique combiné (1) selon la revendication 1, **caractérisé en ce que** l'échangeur de chaleur (3) est réalisé à partir de profilés à double paroi (8) disposés transversalement par rapport au module photovoltaïque (2).

3. Module photovoltaïque-thermique combiné (1) selon la revendication 1 ou 2, **caractérisé en ce que** ladite au moins une structure de canal ou conduite (5) de l'échangeur de chaleur (3) présente des surfaces échangeuses de chaleur (6) avec l'air ambiant agrandies.

4. Module thermique-photovoltaïque combiné (1) selon la revendication 3, **caractérisé en ce que** l'échangeur de chaleur (3) comporte au moins une conduite (5) dotée de ailettes (10) - dites tubes à ailettes - augmentant la surface.

5. Module photovoltaïque-thermique combiné (1) selon la revendication 3, **caractérisé en ce que** l'échangeur de chaleur (3) comporte au moins une conduite (5) dotée de fils - dits tubes échangeurs de chaleur à fils - augmentant la surface.

6. Module photovoltaïque-thermique combiné (1) selon la revendication 1 ou 3, **caractérisé en ce qu'**au moins un profilé (11) en matériau à bonne conductivité thermique, de préférence produit par extrusion, est stratifié sur la face arrière du module photovoltaïque (2) et **en ce que** le profilé (11) est façonné de manière à ce qu'il puisse accueillir ladite au moins une conduite (5) à une certaine distance du module photovoltaïque (2) de manière à ce qu'elle conduise bien la chaleur, dans lequel le profilé (11) peut être doté de surfaces échangeuses de chaleur (6) ou de ailettes qui augmentent la surface de contact avec l'air ambiant (7).

7. Module photovoltaïque-thermique combiné (1) selon la revendication 6, **caractérisé en ce que** ladite au moins une conduite (5) et/ou ledit au moins un tube collecteur (9) sont fixés dans des réceptacles en forme de clips du profilé (11).

8. Module thermique-photovoltaïque combiné (1) selon la revendication 1 ou 3, **caractérisé en ce que** l'échangeur de chaleur (3) est réalisé sous la forme d'un échangeur de chaleur à lamelles-air (13) comprenant une ou plusieurs conduites (5) et des plaques formant ailettes (12) montées sur celles-ci, et **en ce que** les plaques formant ailettes (12) sont en contact thermiquement conducteur avec le module photovoltaïque (2).

9. Module photovoltaïque-thermique combiné (1) selon la revendication 8, **caractérisé en ce que** des plaques d'extrémité (14) de l'échangeur de chaleur à lamelles-air (13) sont conçues de telle manière qu'elles servent directement à fixer l'échangeur de chaleur à lamelles-air au module photovoltaïque et remplacent le châssis (18) du module photovoltaïque.

10. Module photovoltaïque-thermique combiné (1) selon l'une des revendications 4, 8 ou 9, **caractérisé en ce que** le bord des ailettes (10) ou des plaques formant ailettes (12) est replié sur la face tournée vers le module photovoltaïque (2), et repose ainsi à plat sur le module photovoltaïque avec une surface d'appui (10b, 12b) agrandie.

11. Module photovoltaïque-thermique combiné (1) selon l'une des revendications 1 à 10, **caractérisé en ce que** le contact thermiquement conducteur entre l'échangeur de chaleur (3) et le module photovoltaïque (2) est réalisé par pressage mécanique combiné à un collage.

12. Module photovoltaïque-thermique combiné (1) selon l'une des revendications 1 à 11, **caractérisé en ce que** le module photovoltaïque (2) est transparent entre les cellules PV et **en ce que** l'échangeur de chaleur (3) est sombre, c'est-à-dire qu'il absorbe le rayonnement solaire.

13. Module photovoltaïque-thermique combiné (1) selon l'une des revendications 1 à 11, **caractérisé en ce que** le module photovoltaïque (2) est transparent entre les cellules PV et **en ce que** l'échangeur de chaleur (3) est revêtu de manière sélective, c'est-à-dire qu'il absorbe le rayonnement solaire avec une émission réduite de rayonnement infrarouge.

14. Module photovoltaïque-thermique combiné (1) selon l'une des revendications 1 à 13, **caractérisé en ce que** le module photovoltaïque-thermique (1) est couplé à une pompe à chaleur et **en ce que** le fluide frigorigène de la pompe à chaleur circule directement dans la ou les conduites (5) du module photovoltaïque-thermique (1).
